(19) Europäisches Patentamt
European Patent Office
Office européen des brevets

(11) **EP 2 177 780 A2**

(12) **EUROPÄISCHE PATENTANMELDUNG**

(43) Veröffentlichungstag:
21.04.2010 Patentblatt 2010/16

(51) Int Cl.:
*F16D 25/0638* (2006.01)  *F16D 25/12* (2006.01)

(21) Anmeldenummer: 09172624.0

(22) Anmeldetag: 09.10.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA RS

(30) Priorität: 16.10.2008 DE 102008042884
03.02.2009 DE 102009000567

(71) Anmelder: **ZF Friedrichshafen AG**
**88038 Friedrichshafen (DE)**

(72) Erfinder:
• **Sueck, Gregor**
 **97526, Sennfeld (DE)**
• **Dacho, Jürgen**
 **97688, Bad Kissingen (DE)**
• **Adelmann, Thomas**
 **97282, Retzstadt (DE)**

(54) **Nasslaufende Kopplungsanordnung**

(57) Eine nasslaufende Kopplungsanordnung, insbesondere nasslaufende Lamellenkupplung oder Überbrückungskupplung, umfassend eine mit einer Gehäuseanordnung (12) zur Drehung um eine Drehachse (A) gekoppelte erste Reibflächenformation (16) und eine mit einem Abtriebsorgan (34) zur Drehung um die Drehachse (A) gekoppelte zweite Reibflächenformation (22) sowie einen vorzugsweise ringartigen Anpresskolben (34), wobei der Anpresskolben (34) mit der Gehäuseanordnung (12) einen Druckfluidraum (46) begrenzt und durch Fluiddruckänderung im Druckfluidraum (46) zur Beeinflussung der Reibwechselwirkung der Reibflächenformationen (16, 22) miteinander in Richtung der Drehachse (A) bewegbar ist, ist **dadurch gekennzeichnet, dass** eine zur Erzeugung einer den Anpresskolben beaufschlagenden Kraft effektiv wirksame Fluidbeaufschlagungsfläche des Anpresskolbens (34) im Bereich von 15000mm$^2$ bis 25000 mm$^2$ liegt.

Fig. 1

**Beschreibung**

Die vorliegende Erfindung betrifft eine nasslaufende Kopplungsanordnung, insbesondere nasslaufende Lamellenkupplung oder Überbrückungskupplung, umfassend eine mit einer Gehäuseanordnung zur Drehung um eine Drehachse gekoppelte erste Reibflächenformation und eine mit einem Abtriebsorgan zur Drehung um die Drehachse gekoppelte zweite Reibflächenformation sowie einen vorzugsweise ringartigen Anpresskolben, wobei der Anpresskolben mit der Gehäuseanordnung einen Druckfluidraum begrenzt und durch Fluiddruckänderung im Druckfluidraum zur Beeinflussung der Reibwechselwirkung der Reibflächenformationen miteinander in Richtung der Drehachse bewegbar ist.

Die WO 200/124720 A1 offenbart einen hydrodynamischen Drehmomentwandler mit einer als Überbrückungskupplung wirksamen nasslaufenden Kopplungsanordnung. Diese kann eine Drehmomentübertragungsverbindung zwischen einem Wandlergehäuse und einer Turbinenradnabe herstellen. Die nasslaufende Kopplungsanordnung umfasst als erste Reibflächenformation eine Mehrzahl von über einen Außenlamellenträger an dem Wandlergehäuse drehfest getragenen Lamellen. Die zweite Reibflächenformation umfasst ebenfalls eine Mehrzahl von Lamellen, die über einen Innenlamellenträger an das Turbinenrad einerseits und über eine zweistufige Torsionsschwingungsdämpferanordnung an die Abtriebsnabe andererseits angekoppelt sind.

Ein ringartiger Anpresskolben beaufschlagt in seinem radial äußeren Bereich die Lamellen und presst diese zur Herstellung eines Einrückzustands gegeneinander. Radial etwas weiter innen ist der Anpresskolben bezüglich des am Wandlergehäuse fest getragenen Außenlamellenträgers fluiddicht axial bewegbar geführt. In seinem radial inneren Endbereich ist der Anpresskolben bezüglich eines an der Innenseite des Wandlergehäuses festgelegten ringartigen Nabenelementes fluiddicht axial bewegbar geführt. Zusammen mit dem Wandlergehäuse begrenzt der Anpresskolben somit einen Druckfluidraum. Durch Druckfluidzufuhr in diesem Druckfluidraum kann der Druck erhöht werden und somit eine den Kolben in Richtung auf die Reibflächenformationen zu beaufschlagende Kraft erzeugt werden. Die dabei zum Erzeugen einer Einrückkraft effektiv wirksame Fluidbeaufschlagungsfläche entspricht im Wesentlichen einer Ringfläche, die zwischen den beiden radial äußeren bzw. inneren Abdichtungsstellen des Anpresskolbens begrenzt ist.

Soll in einem Antriebsstrang mit einem derartigen hydrodynamischen Drehmomentwandler spontan ein höheres Drehmoment übertragen werden, so muss spontan die Überbrückungskupplung eingerückt werden, was eine entsprechend spontane Erhöhung des Fluiddrucks im Druckfluidraum erforderlich macht. Die vorhandenen Strömungswiderstände, das mit Druckfluid zu füllende Volumen des Druckfluidraums und auch Leitungswiderstände im Getriebe beeinträchtigen die Geschwindigkeit, mit welcher die Überbrückungskupplung in einen Einrückzustand gebracht werden kann. Dies führt zu für einen Fahrer unangenehm spürbaren Verzögerungen bei der Beeinflussung der Drehmomentübertragung.

Es ist die Aufgabe der vorliegenden Erfindung, eine nasslaufende Kopplungsanordnung bereitzustellen, mit welcher ein verbessertes Stellverhalten erzielbar ist.

Gemäß einem ersten Aspekt der vorliegenden Erfindung wird diese Aufgabe gelöst durch eine nasslaufende Kopplungsanordnung, insbesondere nasslaufende Lamellenkupplung oder Überbrückungskupplung, umfassend eine mit einer Gehäuseanordnung zur Drehung um eine Drehachse gekoppelte erste Reibflächenformation und eine mit einem Abtriebsorgan zur Drehung um die Drehachse gekoppelte zweite Reibflächenformation sowie einen ringartigen Anpresskolben, wobei der Anpresskolben mit der Gehäuseanordnung einen Druckfluidraum begrenzt und durch Fluiddruckänderung im Druckfluidraum zur Beeinflussung der Reibwechselwirkung der Reibflächenformationen miteinander in Richtung der Drehachse bewegbar ist.

Erfindungsgemäß ist dabei weiter vorgesehen, dass eine zur Erzeugung einer den Anpresskolben beaufschlagenden Kraft effektiv wirksame Fluidbeaufschlagungsfläche des Anpresskolbens im Bereich von 15000 mm$^2$ bis 25000 mm$^2$ liegt.

Die vorliegende Erfindung hat erkannt, dass durch die Auswahl der effektiv wirksamen Fluidbeaufschlagungsfläche in dem vorangehend angegebenen Bereich ein optimaler Kompromiss erzielt werden kann zwischen der erreichbaren Anpresskraft einerseits und der Reaktionszeit der Kopplungsanordnung andererseits. Je kleiner die Fluidbeaufschlagungsfläche ist, desto geringer kann auch das Volumen des Druckfluidraums sein und somit auch die zum Erreichen einer bestimmten Axialbewegung des Anpresskolbens erforderliche Fluidmenge. Andererseits bedeutet eine vergleichsweise kleine Fluidbeaufschlagungsfläche selbstverständlich, dass der vorhandene Fluiddruck nur in eine durch die Größe dieser Fläche bestimmte Kraft umgesetzt werden kann. Durch Auswahl der Fluidbeaufschlagungsfläche im angegebenen Größenbereich wird bei ausreichend geringer Reaktionszeit eine ausreichend große Anpresskraft erzeugbar.

Vorzugsweise kann vorgesehen sein, dass die Fluidbeaufschlagungsfläche kleiner als 21000 mm$^2$ ist.

Gemäß einem weiteren Aspekt kann bei einer gattungsgemäß aufgebauten nasslaufenden Kopplungsanordnung, ggf. in Verbindung mit den vorangehend diskutierten Merkmalen, vorgesehen sein, dass gilt:

$$0{,}85 < D_R / D_A < 1{,}5,$$

wobei:

D$_R$ der Durchmesser des Anpresskolbens in seinem die Reibflächenformationen beaufschlagenden Bereich ist;

D$_A$ der Außendurchmesser der Fluidbeaufschlagungsfläche des Anpresskolbens ist.

Die Auswahl des angegebenen Verhältnisses stellt sicher, dass die Beaufschlagung der Reibflächenformationen in einem derartigen radialen Bereich erfolgt, der die Ausgestaltung derselben mit vergleichsweise großem Durchmesser und mithin auch vergleichsweise großer Reiboberfläche gestattet.

Dabei kann beispielsweise vorgesehen sein, dass der Außendurchmesser der Fluidbeaufschlagungsfläche im Wesentlichen dem Außendurchmesser des Anpresskolbens entspricht.

Gemäß einem weiteren Aspekt der vorliegenden Erfindung kann bei einem gattungsgemäßen Aufbau einer nasslaufenden Kopplungsanordnung, ggf. in Verbindung mit den vorangehend erläuterten Merkmalen, vorgesehen sein, dass gilt:

$$0,1 < D_I / D_A < 0,8,$$

wobei:

D$_I$, der Innendurchmesser der Fluidbeaufschlagungsfläche des Anpresskolbens ist,

D$_A$ der Außendurchmesser der Fluidbeaufschlagungsfläche des Anpresskolbens ist.

Dabei kann weiter vorgesehen sein, dass der Innendurchmesser der Fluidbeaufschlagungsfläche im Wesentlichen dem Innendurchmesser des Anpresskolbens entspricht, bzw. dass der Außendurchmesser der Fluidbeaufschlagungsfläche im Wesentlichen dem Außendurchmesser des Anpresskolbens entspricht.

Die vorliegende Erfindung wird nachfolgend mit Bezug auf die beiliegenden Figuren detailliert erläutert. Es zeigt:

Fig. 1    eine Teil-Längsschnittansicht einer erfindungsgemäß aufgebauten nasslaufenden Kopplungsanordnung;

Fig. 2    eine der Fig. 1 entsprechende Darstellung einer alternativen Ausgestaltungsart.

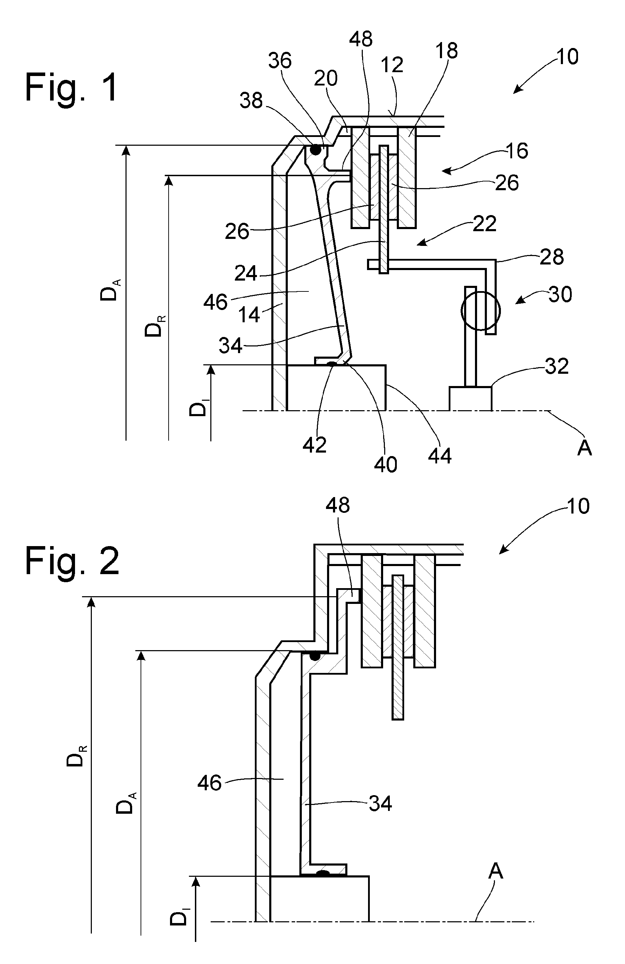

In Fig. 1 ist eine nasslaufende Kopplungsanordnung 10 dargestellt, die beispielsweise als Überbrük-kungskupplung in einem hydrodynamischen Drehmomentwandler oder dergleichen vorgesehen sein kann, die gleichermaßen jedoch auch als nasslaufende Kupplung, also als so genannte nasslaufende Lamellenkupplung, ausgebildet sein kann.

Die Kopplungsanordnung 10 umfasst eine Gehäuseanordnung 12, beispielsweise mit zwei Gehäuseschalen, von welchen in der Fig. 2 eine motorseitig zu positionierende Gehäuseschale 14 dargestellt ist. Bei Integration in einen hydrodynamischen Drehmomentwandler kann eine getriebeseitige Gehäuseschale ein Pumpenrad bilden. Mit der Gehäuseanordnung 12 ist eine erste Reibflächenformation 16, umfassend zwei als so genannte Lamellen ausgebildete Reibelemente 18, zur gemeinsamen Drehung um eine Drehachse A gekoppelt. Hierzu kann die Gehäuseanordnung 12 mit einer Verzahnungsformation 20 ausgebildet sein, mit welcher die Reibelemente 18 der ersten Reibflächenformation 16 in Drehkopplungseingriff stehen.

Eine zweite Reibflächenformation 22 umfasst ein ebenfalls lamellenartig ausgebildetes Reibelement 24 mit Reibbelägen 26 an beiden axialen Seiten. Das Reibelement 24 ist über einen Reibelemententräger 28 und ggf. eine schematisch dargestellte Torsionsschwingungsdämpferanordnung 30 an eine als Abtriebsorgan wirksame Abtriebsnabe 32 angekoppelt. In einem hydrodynamischen Drehmomentwandler kann im Drehmomentenfluss vor der Torsionsschwingungsdämpferanordnung, nach der Torsionsschwingungsdämpferanordnung oder in einer mehrstufig ausgebildeten Torsionsschwingungsdämpferanordnung dann ein Turbinenrad angekoppelt sein.

Um die Reibflächenformationen 16, 22 in Reibwechselwirkung bringen zu können, ist ein ringartig ausgebildeter Anpresskolben 34 vorgesehen. Dieser ist in seinem radial äußeren Endbereich 36 vermittels eines als O-Ring oder dergleichen ausgebildeten Dichtungselement 38 bezüglich der Gehäuseanordnung 12 fluiddicht in Richtung der Drehachse A bewegbar geführt. In seinem radial inneren Endbereich 40 ist der Anpresskolben 34 vermittels eines Dichtungselements 42 beispielsweise bezüglich eines an der Gehäuseanordnung 12 festgelegten Nabenelements 44 oder dergleichen fluiddicht in Richtung der Drehachse A bewegbar geführt. Zwischen der Gehäuseanordnung 12 und dem Anpresskolben 34 ist ein Druckfluidraum 46 gebildet, in welchem beispielsweise durch die Nabe 44 hindurch über eine Abtriebswelle oder dergleichen zugeführtes Druckfluid eingeleitet bzw. von dort auch abgezogen werden kann. Durch Erhöhung des Fluiddrucks im Druckfluidraum 46 wird unter Abstützung an der Gehäuseanordnung 12 eine Kraft auf den Anpresskolben 34 ausgeübt, welche diesen in Richtung auf die Reibflächenformationen 16, 22 zu belastet, um die Kopplungsanordnung 10 in einen Einrückzustand zu bringen. Dabei presst der Anpresskolben 34 mit einem beispielsweise ringartig ausgebildeten Beaufschlagungsbereich 48 gegen die Reibflächenformationen 16, 22, hier das erste Reibelement 18 der antriebsseitigen Reibflächenformation 16.

Um mit dem erfindungsgemäßen Aufbau eine möglichst schnelle Reaktionszeit erlangen zu können, also bei Erhöhung des Fluiddrucks im Druckfluidraum 46 möglichst schnell eine zum Einrücken erforderliche Bewegung des Anpresskolbens 34 zu erreichen, ist gemäß den Prinzipien der vorliegenden Erfindung vorgesehen, dass eine zur Erzeugung einer derartigen Kraftwirkung effektiv wirksame Fluidbeaufschlagungsfläche des Anpresskolbens 44 im Bereich zwischen 15000 mm$^2$ und 25000 mm$^2$ ist, vorzugsweise kleiner als 21000 mm$^2$ ist. Die effektiv wirksame Fluidbeaufschlagungsfläche ist hier diejenige Fläche, die bei Projektion auf eine zur Drehachse A orthogonale Ebene dazu beiträgt, eine entsprechende Umsetzung des Fluiddrucks in eine den Anpresskolben 34 axial belastende Kraft zu erzeugen. In dem in der Fig. 1 dargestellten Beispiel ist dies die Ringfläche zwischen dem Außendurchmesser $D_A$ und dem Innendurchmesser $D_I$, welche Durchmesser hier sowohl den entsprechenden Durchmesser des Anpresskolbens 34, als auch den entsprechenden Durchmesser der Fluidbeaufschlagungsfläche definieren.

Während bei dem in der Fig. 1 gezeigten Ausgestaltungsbeispiel der Beaufschlagungsbereich 48 des Anpresskolbens 34 radial innerhalb der fluiddichten Führung bezüglich der Gehäuseanordnung 12 liegt, liegt bei der in Fig. 2 gezeigten Ausgestaltungsform der Beaufschlagungsbereich 48 radial außerhalb dieser Führung. Man erkennt hier also, dass der Außendurchmesser $D_A$ der Fluidbeaufschlagungsfläche kleiner ist, als der tatsächliche Außendurchmesser des Anpresskolbens 34. Auch bei dieser Ausgestaltungsform kann durch Auswahl der durch die auf eine zur Drehachse A orthogonale Ebene projezierte Ringfläche zwischen dem Außendurchmesser $D_A$ und dem Innendurchmesser $D_I$, definierten Fluidbeaufschlagungsfläche in dem vorangehend angegebenen Flächenbereich bei ausreichend großer Anpresskraft durch ein vergleichsweise geringes Volumen des Druckfluidraums 46 eine schnelle Reaktion der Kopplungsanordnung 10 sichergestellt werden.

Es hat sich weiter als vorteilhaft erwiesen, wenn für die Größen $D_A$, $D_I$, und $D_R$, wobei $D_R$ der Durchmesser, beispielsweise mittlere Durchmesser, des Beaufschlagungsbereichs 48 ist, folgende Beziehungen gelten:

$$0{,}85 < D_R / D_A < 1{,}5$$

und/oder

$$0{,}1 < D_I / D_A < 0{,}8.$$

Es ist selbstverständlich, dass die Prinzipien der vorliegenden Erfindung, insbesondere hinsichtlich der einzeln bzw. auch in Kombination vorsehbaren Größenverhältnisse bzw. Größenangaben, in verschiedenster Weise variiert werden können. So können selbstverständlich die Reibflächenformationen 16, 22 mit einer anderen Anzahl an Reibelementen bzw. Lamellen ausgestaltet sein. Auch können selbstverständlich die Reibelemente der antriebsseitigen Reibflächenformation 16 nicht unmittelbar, sondern über einen Reibelemententräger oder dergleichen an die Gehäuseanordnung angekoppelt sein. Der Anpresskolben 34 kann in seinem radial inneren Endbereich bezüglich einer anderen Baugruppe als die Gehäuseanordnung bzw. einer daran festgelegten Nabe fluiddicht axial bewegbar geführt sein. Beispielsweise könnte eine Abtriebswelle dies in den axialen Bereich des Anpresskolbens 34 geführt sein, so dass der Anpresskolben 34 auf einer derartigen Welle axial bewegbar geführt sein könnte.

**Patentansprüche**

1. Nasslaufende Kopplungsanordnung, insbesondere nasslaufende Lamellenkupplung oder Überbrückungskupplung, umfassend eine mit einer Gehäuseanordnung (12) zur Drehung um eine Drehachse (A) gekoppelte erste Reibflächenformation (16) und eine mit einem Abtriebsorgan (34) zur Drehung um die Drehachse (A) gekoppelte zweite Reibflächenformation (22) sowie einen vorzugsweise ringartigen Anpresskolben (34), wobei der Anpresskolben (34) mit der Gehäuseanordnung (12) einen Druckfluidraum (46) begrenzt und durch Fluiddruckänderung im Druckfluidraum (46) zur Beeinflussung der Reibwechselwirkung der Reibflächenformationen (16, 22) miteinander in Richtung der Drehachse (A) bewegbar ist,
**dadurch gekennzeichnet, dass** eine zur Erzeugung einer den Anpresskolben beaufschlagenden Kraft effektiv wirksame Fluidbeaufschlagungsfläche des Anpresskolbens (34) im Bereich von 15000 mm$^2$ bis 25000 mm$^2$ liegt.

2. Nasslaufende Kopplungsanordnung nach Anspruch 1,
**dadurch gekennzeichnet, dass** die Fluidbeaufschlagungsfläche kleiner als 21000 mm$^2$ ist.

3. Nasslaufende Kopplungsanordnung nach Anspruch 1 oder 2 oder dem Oberbegriff des Anspruchs 1,
**dadurch gekennzeichnet, dass** gilt:

$$0{,}85 < D_R / D_A < 1{,}5,$$

wobei:

$D_R$ der Durchmesser des Anpresskolbens (34) in seinem die Reibflächenformationen (16, 22) beaufschlagenden Bereich (48) ist,

$D_A$ der Außendurchmesser der Fluidbeaufschlagungsfläche des Anpresskolbens (34) ist.

4. Nasslaufende Kopplungsanordnung nach Anspruch 3,
**dadurch gekennzeichnet, dass** der Außendurchmesser ($D_A$) der Fluidbeaufschlagungsfläche im Wesentlichen dem Außendurchmesser des Anpresskolbens (34) entspricht.

5. Nasslaufende Kopplungsanordnung nach einem der Ansprüche 1 bis 4 oder dem Oberbegriff des Anspruchs 1,
**dadurch gekennzeichnet, dass** gilt:

$$0,1 < D_I \,/\, D_A < 0,8,$$

wobei:

$D_I$ der Innendurchmesser der Fluidbeaufschlagungsfläche des Anpresskolbens (34) ist,

$D_A$ der Außendurchmesser der Fluidbeaufschlagungsfläche des Anpresskolbens (34) ist.

6. Nasslaufende Kopplungsanordnung nach Anspruch 5,
**dadurch gekennzeichnet, dass** der Innendurchmesser ($D_I$) der Fluidbeaufschlagungsfläche im Wesentlichen dem Innendurchmesser des Anpresskolbens (34) entspricht.

7. Nasslaufende Kopplungsanordnung nach Anspruch 5 oder 6,
**dadurch gekennzeichnet, dass** der Außendurchmesser ($D_A$) der Fluidbeaufschlagungsfläche im Wesentlichen dem Außendurchmesser des Anpresskolbens (34) entspricht.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200124720 A1